# EUROPÄISCHE PATENTANMELDUNG

(11) **EP 3 032 178 A1**
(43) Veröffentlichungstag der Anmeldung: **15.06.2016**
(21) Anmeldenummer: 15192710.0
(22) Anmeldetag: 03.11.2015
(51) Int. Cl.: F24C 15/16, A47B 88/10, A47B 88/14, F16C 29/00, F16C 29/04, F16C 33/42

(54) **TELESKOPIERBARE AUSZUGSCHIENE, ALS VOLLAUSZUG UND TEILAUSZUG, INSBESONDERE FÜR EINEN SCHIENENAUSZUG IN EINEM BACKOFEN**

(30) Priorität: 10.12.2014 DE 202014105949 U
(71) Anmelder: Hans Giesbert GmbH & Co. KG, 63776 Mömbris (DE)
(72) Erfinder: Bozem, Karl-Heinz, 63776 Mömbris-Brücken (DE)
(74) Vertreter: Aue, Hans-Peter

(57) **Zusammenfassung**

Die Erfindung bezieht sich auf eine teleskopierbare Auszugschiene, als Vollauszug und Teilauszug, wobei die Auszugschienen (1) jeweils eine Innenschiene und diese teilweise übergreifende Außenschiene (3) aufweisen und zwischen der Innenschiene (2) und dazu verschiebbarer Außenschiene (3) zumindest ein Kugelkäfig (4) mit Kugeln (5) angeordnet ist. Beim Vollauszug besteht die Außenschiene (3) aus zwei Einzelschienen und beim Teilauszug aus einer einzelnen Schiene, welche den an einer Längsseite der Innenschiene geführten Kugelkäfig (4) zumindest teilweise umgreifen. Beim Vollauszug weist die Innenschiene (2) im Querschnitt einen geraden Mittelabschnitt (6) auf, der an seinen jeweiligen, den Außenschienen (3) zugwandten Endbereichen in eine abgewinkelte U-Form übergeht, wobei die U-förmigen Enden dann weiter nach außen in jeweils einen Endbereich parallel zum Mittelabschnitt (6) verlaufen, und zwischen dem Mittelabschnitt (6) und den dazu parallelen Endbereichen die jeweils beiden sich paarweise gegenüber befindlichen Laufbahnen (7) der Kugeln (5) der Kugelkäfige (4) gebildet sind.

## Beschreibung

Die Erfindung bezieht sich auf eine teleskopierbare Auszugschiene, als Vollauszug und Teilauszug, insbesondere für einen Schienenauszug, wie Bleche, Roste und dergleichen in einem Backofen, wobei die Auszugschienen jeweils eine Innenschiene und diese teilweise übergreifende Außenschiene aufweisen und zwischen der Innenschiene und dazu verschiebbarer Außenschiene zumindest ein Kugelkäfig mit Kugeln angeordnet ist, die in Laufbahnen der Innenschiene und der Außenschiene geführt sind. Beim Vollauszug besteht die Außenschiene aus zwei Einzelschienen, welche jeweils die an den Längsseiten der Innenschiene geführten Kugelkäfige zumindest teilweise umgreifen. Beim Teilauszug besteht die Außenschiene aus einer einzelnen Schiene, welche den an einer Längsseite der Innenschiene geführten Kugelkäfig zumindest teilweise umgreift.

Beispielsweise bei Backöfen werden meist Längsvertiefungen in den Seitenwänden des Innenraums genutzt, in denen Bleche, Roste usw. durch Handauszug und -einschub geführt werden. Bekannt sind aber auch einfache teleskopierbare Auszugschienen, auf denen Bleche und Roste aufgelegt und dann in den Backofen eingeschoben werden. Nachteilig ist bei solchen Handauszügen und auch bei Anschläge aufweisenden Auszügen, dass diese, da sie in der Regel paarweise verwendet werden, relativ zueinander verkanten und/oder unterschiedliche Längen- und Höhenpositionen einnehmen, was aber unerwünscht ist.

Die DE 20 2010 008 825 U1 offenbart eine Teleskopschiene mit einer Grundschiene und einer Auszugschiene, die jeweils einen C-förmigen Querschnitt aufweisen, wobei die jeweiligen Schenkel mit an Wälzkörper angepassten Laufflächen versehen sind und sich die die Schenkel verbindenden Stege unter Bildung eines Hohlraums auf gegenüberliegenden Seiten der Teleskopschiene befinden. Zur paarweisen Anordnung der Teleskopschienen in einem Korpus, z.B. dem Innenraum eines Backofens, wird jede der Teleskopschienen an der Innenwand oder einem Seitenteil, z.B. einem Gitter, des Backofens befestigt. Beispielsweise kann der Steg der Grundschiene mittels Schweißen, Nieten oder Schrauben an einem Gestell, in einem Backofen festgelegt werden und auf dem Schenkel der Auszugschiene ist insbesondere ein Backblech oder ein Gitterrost mittels der Halteelemente lösbar befestigt. Die beiden Teleskopschienen befinden sich in einer Ebene und sind gemeinsam über eine Vorderkante des Korpus herausziehbar.

Im Weiteren offenbart die DE 20 2012 104 244 U1 eine Vollauszug- oder Teilauszug-Teleskopschiene, insbesondere für einen Geräte- oder Möbelkorpus, wobei die Innenschiene aus zwei in Längsrichtung lösbar oder unlösbar symmetrisch aneinander befestigten Einzelschienen besteht, wobei bei der Vollauszug-Teleskopschiene die Innenschiene einen im Wesentlichen X-förmigen Querschnitt und bei der Teilauszug-Teleskopschiene die Innenschiene einen im Wesentlichen Y-förmigen Querschnitt aufweist. Dadurch ist die jeweilige Innenschiene aufwändig herstellbar.

Die meisten bekannten Teleskopschienen besitzen üblicherweise flache, d.h. im Querschnitt grundsätzlich etwa rechteckförmige Außen- und Innenschienen. Diese sind in Abhängigkeit von ihrer Form und konstruktiven Ausgestaltung oft sehr aufwändig herzustellen. Darüber hinaus sind durch die im Wesentlichen Rechteckform der Teleskopschiene dem Kugel- bzw. Wälzkörperspiel und der Kugel- bzw. Wälzkörpergenauigkeit enge Grenzen gesetzt. Dies hat letztlich auch negative Auswirkungen auf die Laufeigenschaften der Kugeln bzw. Wälzkörper und die Funktion der Teleskopschiene insgesamt. Es ist Aufgabe der Erfindung, eine teleskopierbare Auszugschiene, als Vollauszug und Teilauszug, der eingangs genannten Art zu schaffen, bei der die Materialeinsatzkosten durch kompakte Bauweise und damit der Fertigungsprozess durchweg optimiert sowie die Funktionseigenschaften der Auszugschiene, wie insbesondere das Verdreh- bzw. Radialspiel, verbessert werden können.

Erfindungsgemäß wird die Aufgabe dadurch gelöst, dass
- beim Vollauszug die Innenschiene im Querschnitt einen geraden Mittelabschnitt aufweist, der an seinen jeweiligen, den Außenschienen zugwandten Endbereichen in eine abgewinkelte U-Form übergeht, wobei die U-förmigen Enden dann weiter nach außen in jeweils einen Endbereich parallel zum Mittelabschnitt verlaufen, und zwischen dem Mittelabschnitt und den dazu parallelen Endbereichen die jeweils beiden sich paarweise gegenüber befindlichen Laufbahnen der Kugeln der Kugelkäfige gebildet sind,
- beim Teilauszug die Innenschiene im Querschnitt einen geraden Mittelabschnitt aufweist, der an seinem der Außenschiene zugewandten Endbereich in eine abgewinkelte halbe U-Form übergeht, wobei das halbe U-förmige Ende dann weiter nach außen in einen Endbereich parallel zum Mittelabschnitt verläuft, und zwischen dem Mittelabschnitt und dem dazu parallelen Endbereich die beiden sich gegenüber befindlichen Laufbahnen der Kugeln des Kugelkäfigs gebildet sind, wobei der Mittelabschnitt der Innenschiene an seinem der halben U-Form entgegengesetzten Ende in einen abgewinkelten Befestigungsabschnitt übergeht.

Vor allem durch die Verwendung von einteiligen und nicht miteinander verbundenen Teilen der Innenschiene und die Verwendung der Form später noch gezeigter einteiliger Außenschienen können eine kompakte Bauweise von teleskopierbaren Auszugschienen, sowohl als Vollauszug als auch als Teilauszug, realisiert und der Herstellungsaufwand verringert werden. Darüber hinaus hat sich gezeigt, dass das Verdreh- bzw. Radialspiel der Außenschiene verringert wird.

Nach einer weiteren Ausgestaltung der teleskopierbaren Auszugschiene sind beim Vollauszug die Laufbahnen für die Kugeln des Kugelkäfigs derart ausgebildet, dass zwischen dem Mittelabschnitt und jeweils einem dazu parallelen Endbereich der Innenschiene jeweils eine Laufbahn innerhalb und eine Laufbahn außerhalb der U-Form verläuft, so dass sich die beiden Laufbahnen an jeder Seite der Innenschiene versetzt gegenüber liegen und somit zwischen dem Mittelabschnitt und den beiden Endbereichen der Innenschiene zwei sich gegenüberliegende Paare von Laufbahnen ausgebildet sind.

Des Weiteren sind beim Teilauszug die Laufbahnen für die Kugeln des Kugelkäfigs derart ausgebildet, dass zwischen dem Mittelabschnitt und dem dazu parallelen Endbereich der Innenschiene jeweils eine Laufbahn innerhalb und eine Laufbahn außerhalb der U-Form verläuft, so dass sich die beiden Laufbahnen an dieser Seite der Innenschiene versetzt gegenüber liegen und somit ein sich gegenüberliegendes Paar von Laufbahnen ausgebildet ist.

Sowohl bei der Auszugschiene als Vollauszug als auch bei der Auszugschiene als Teilauszug sind selbstverständlich die Laufbahnen an der jeweiligen Innenschiene und die dazu kongruenten Laufbahnen an den Innseiten der jeweiligen Außenschiene an die Form der Kugeln des Kugelkäfigs angepasst.

Eine weitere vorteilhafte Ausgestaltung der teleskopierbaren Auszugschiene besteht darin, dass die Außenschienen jeweils eine im Querschnitt etwa halbkreis- oder kreisrunde Form aufweisen. Dadurch können die Außenschienen aus einem im Wesentlichen rohrförmigen Material auf vergleichsweise einfache Art hergestellt werden. Weiterhin ist die etwa halbkreis- oder kreisrunde Form jeder Außenschiene nur durch einen Spalt für den Durchtritt der Innenschiene unterbrochen.

Durch die im Querschnitt etwa in halbkreis- oder kreisrunder Form ausgebildete Außenschiene bleibt an den Außenflächen weniger Schmutz haften, als bei Teleskopschienen mit horizontalen Flächen, da es wegen der runden Form keine horizontale Auflagefläche für Schmutz, Fett und Staubpartikel gibt.

Darüber hinaus ist vorgesehen, dass beim Vollauszug eine der Einzelschienen der Außenschiene und beim Teilauszug die Innenschiene an einem Gestell, z.B. an einem Backofen lösbar oder starr befestigbar ist.

Vorteilhafterweise sind sowohl die Innenschiene als auch jede Außenschiene der Auszugschiene jeweils einteilig ausgebildet.

Um die Auszugbewegung der teleskopierbaren Auszugschiene zu begrenzen ist an den jeweiligen Enden der Außenschiene ein Anschlag einteilig mit dieser ausgebildet.

Beim bestimmungsgemäßen Gebrauch der Auszugschiene als Vollauszug werden die Einzelschienen der Außenschiene aus der aus den beiden verbundenen Einzelschienen bestehenden Innenschiene herausgezogen oder eingeschoben, wobei die zwischen der Innenschiene und der Außenschiene angeordneten Kugelkäfige mit ihren Kugelkörpern einen definierten Weg zurücklegen und dabei an eine die Geometrie der Kugeln angepasste, nicht näher definierte Aufnahme gelangt und die Außenschiene zu der Innenschiene verrastet. In ähnlicher Weise wird bei der Auszugschiene als Teilauszug die Außenschiene aus der Innenschiene herausgezogen oder eingeschoben.

Durch die Anordnung der Kugeln in den Kugelkäfigen in diagonaler Ausrichtung zwischen der Außenschiene und der Innenschiene wird eine kompakte Bauweise der teleskopierbaren Auszugschiene ermöglicht.

Die annähernd gleiche Bauform der Außenschienen als Vollauszug und Teilauszug ermöglicht eine einfache und wirtschaftliche Fertigung durch Reduzierung der Baugruppen.

Beim Teilauszug kann die Innenschiene mittels Schweißen, Nieten, Schrauben oder dergleichen an einem Gestell, in einem Backofen festgelegt werden. Auf der Außenschiene ist insbesondere eine Schublade, ein Backblech oder ein Gitterrost befestigt. Beim Vollauszug werden die untere Außenschiene z.B. an einem Gestell befestigt und z.B. ein Gitterrost oder dergleichen auf die obere Außenschiene aufgelegt. Die erläuterten teleskopierbaren Auszugschienen werden somit paarweise in einem Korpus, z.B. dem Innenraum eines Backofens platziert.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von Ausführungsbeispielen, welche jeweils auf eine teleskopierbare Auszugschiene, sowohl als Vollauszug als auch auf Teilauszug, gerichtet sind, unter Bezugnahme auf die zugehörigen Zeichnungen näher erläutert. Es zeigen:
- Fig. 1: eine perspektivische Darstellung einer erfindungsgemäßen teleskopierbaren Auszugschiene als Vollauszug,
- Fig. 2: eine perspektivische Teildarstellung der Auszugschiene gemäß Fig.1,
- Fig. 3: eine perspektivische linke Teildarstellung der Auszugschiene von vorn gemäß Fig. 1,
- Fig. 4: eine perspektivische rechte Teildarstellung der Auszugschiene von vorn gemäß Fig. 1,
- Fig. 5: eine perspektivische linke Teildarstellung der Auszugschiene von hinten gemäß Fig. 1,
- Fig. 6: eine perspektivische rechte Teildarstellung der Auszugschiene von hinten gemäß Fig. 1,
- Fig. 7: eine Frontansicht der Auszugschiene gemäß Fig. 1,
- Fig. 8: eine Querschnittsansicht der Auszugschiene gemäß Fig. 1
- Fig. 9: eine perspektivische Darstellung einer erfindungsgemäßen teleskopierbaren Auszugschiene als Teilauszug,
- Fig. 10: eine perspektivische Teildarstellung der Auszugschiene gemäß Fig.9,
- Fig. 11: eine perspektivische linke Teildarstellung der Auszugschiene von vorn gemäß Fig. 9,
- Fig. 12: eine perspektivische rechte Teildarstellung der Auszugschiene von vorn gemäß Fig. 9,
- Fig. 13: eine perspektivische linke Teildarstellung der Auszugschiene von hinten gemäß Fig. 9,
- Fig. 14: eine perspektivische rechte Teildarstellung der Auszugschiene von hinten gemäß Fig. 9,
- Fig. 15: eine Frontansicht der Auszugschiene gemäß Fig. 9,
- Fig. 16: eine Querschnittsansicht der Auszugschiene gemäß Fig. 9, und
- Fig. 17: eine perspektivische Darstellung eines Kugelkäfigs für eine teleskopierbare Auszugschiene.

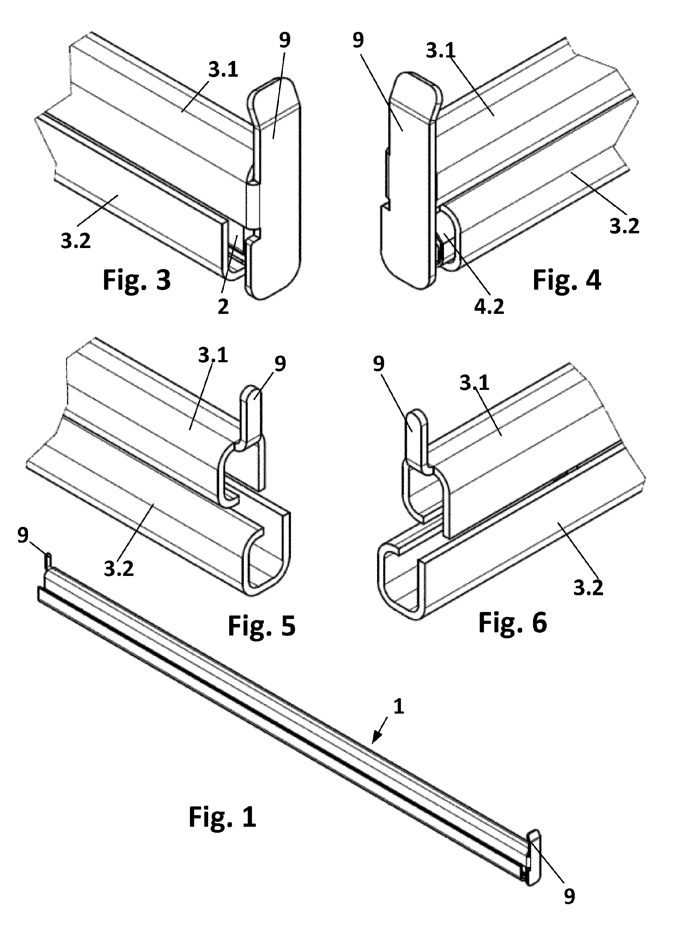

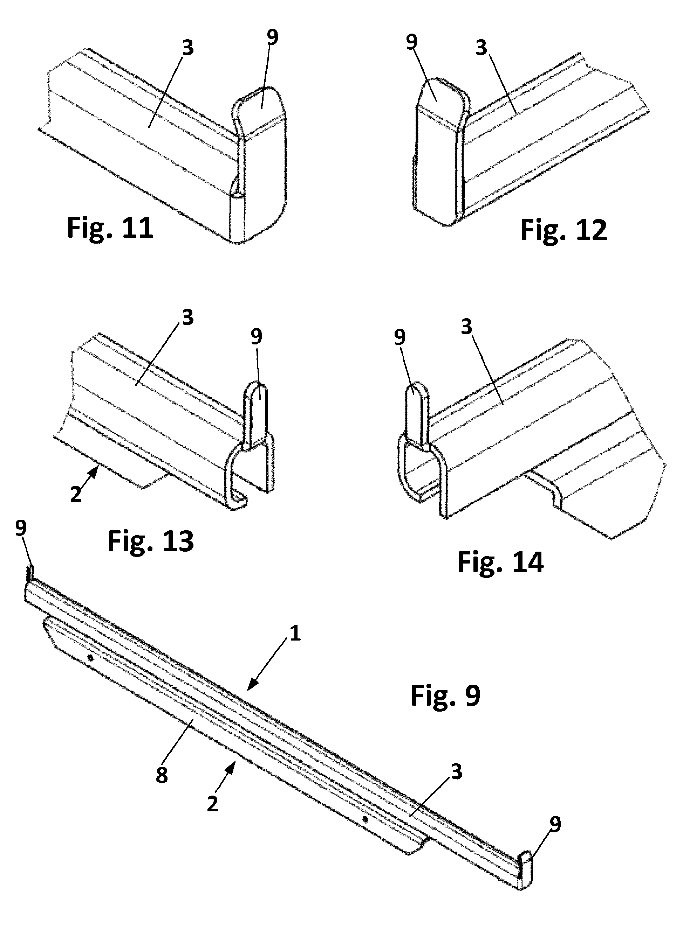

Das erste Ausführungsbeispiel gemäß den Fig. 1 bis 8 bezieht sich auf eine teleskopierbare Auszugschiene als Vollauszug. Das zweite Ausführungsbeispiel gemäß den Fig. 9 bis 16 hingegen bezieht sich auf eine teleskopierbare Auszugschiene als Teilauszug. Für gleiche Bauteile werden nachfolgend gleiche Bezugszeichen verwendet.

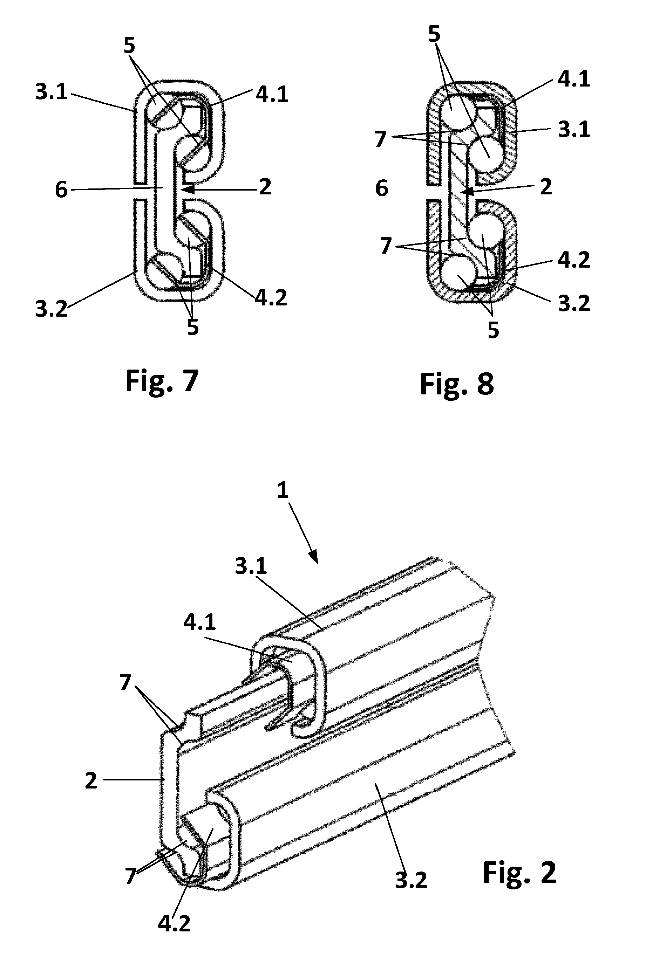

Die teleskopierbare Auszugschiene 1 als Vollauszug ist in ihrer Gesamtheit in Fig. 1 dargestellt, während die Fig. 2 bis 8 Teildarstellungen zeigen.

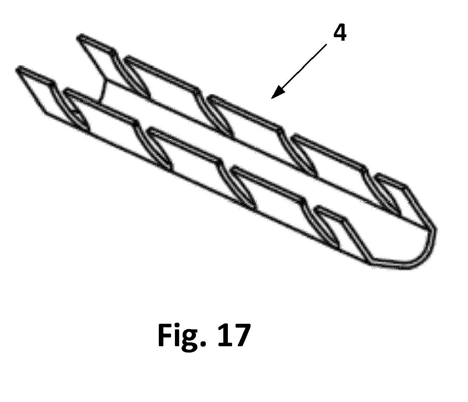

Die Auszugschiene 1 weist eine Innenschiene 2 und Außenschienen 3 auf. Hierbei besteht die Außenschiene 3 aus zwei relativ zur Innenschiene 2 verschiebbaren Einzelschienen 3.1 und 3.2, nämlich einer oberen und einer unteren Einzelschiene, welche jeweils die Längsseiten der Innenschiene 2 zumindest teilweise umgreifen. Zwischen der Innenschiene 2 und den beiden Einzelschienen 3.1 und 3.2 sind Kugelkäfige 4 mit Kugeln 5 angeordnet. Eine perspektivische Darstellung eines Kugelkäfigs 4 ist in Fig. 17 ohne Kugeln gezeigt. Beim Vollauszug sind ein Kugelkäfig 4.1 zwischen der Innenschiene 2 und der oberen Einzelscheine 3.1 und ein Kugelkäfig 4.2 zwischen der Innenschiene 2 und der unteren Einzelscheine 3.2 vorhanden.

Die Innenschiene 2 besitzt im Querschnitt einen geraden Mittelabschnitt 6, der an seinen jeweiligen, den Außenschienen 3 zugwandten Endbereichen in eine abgewinkelte U-Form übergeht, wobei die U-förmigen Enden dann weiter nach außen in jeweils einen Endbereich parallel zum Mittelabschnitt 6 verlaufen: Zwischen dem Mittelabschnitt 6 und den dazu parallelen Endbereichen der Innenschiene 2 sind jeweils zwei sich paarweise gegenüber befindliche Laufbahnen 7 der darin geführten Kugeln 5 der Kugelkäfige 4 ausgebildet.

Die Laufbahnen 7 für die Kugeln 5 des Kugelkäfigs 4 sind derart ausgebildet, dass zwischen dem Mittelabschnitt 7 und jeweils einem dazu parallelen Endbereich der Innenschiene 2 jeweils eine Laufbahn 7 innerhalb und eine Laufbahn 7 außerhalb der U-Form verläuft, so dass sich die beiden Laufbahnen 7 an jeder Seite der Innenschiene 2 versetzt gegenüber liegen. Dadurch werden zwischen dem Mittelabschnitt 7 und den beiden Endbereichen der Innenschiene 2 zwei sich gegenüberliegende Paare von Laufbahnen 7 ausgebildet.

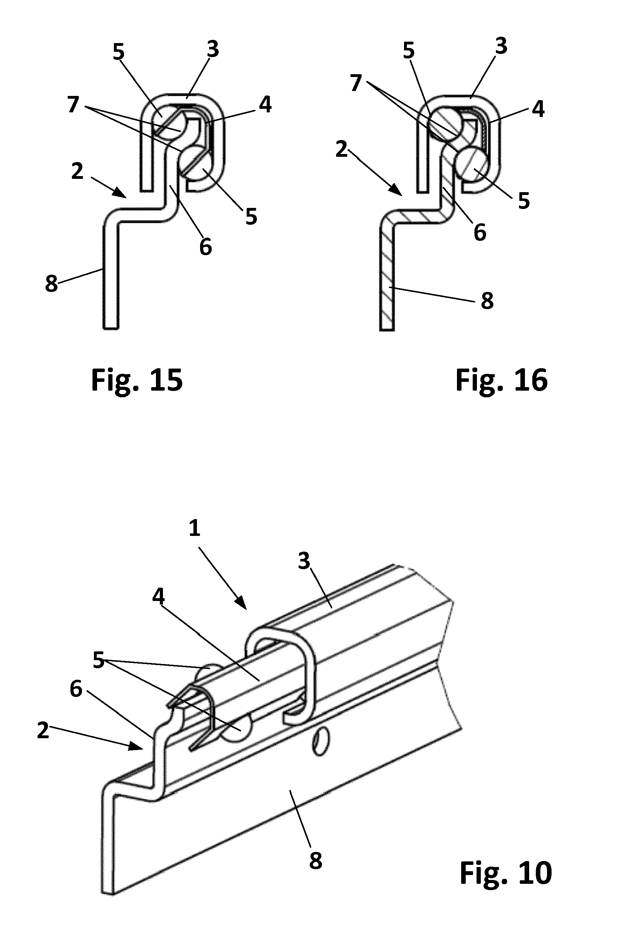

Die teleskopierbare Auszugschiene 1 als Teilauszug ist in ihrer Gesamtheit in Fig. 9 dargestellt, während die Fig. 10 bis 16 Teildarstellungen zeigen.

Die Auszugschiene 1 weist eine Innenschiene 2 und eine einzige Außenschiene 3 als einzelne Schiene auf, welche eine Längsseite der Innenschiene 2 zumindest teilweise umgreift. Zwischen der Innenschiene 2 und der Außenschiene 3 ist lediglich ein Kugelkäfig 4 gemäß Fig. 17 mit Kugeln 5 angeordnet.

Die Innenschiene 2 besitzt im Querschnitt einen geraden Mittelabschnitt 6, der an seinem der Außenschiene 3 zugewandten Endbereich in eine abgewinkelte halbe U-Form übergeht, wobei das halbe U-förmige Ende dann weiter nach außen in einen Endbereich parallel zum Mittelabschnitt 6 verläuft. Zwischen dem Mittelabschnitt 6 und dem dazu parallelen Endbereich sind die zwei sich gegenüber befindliche Laufbahnen 7 der Kugeln 5 des Kugelkäfigs 4 gebildet, wobei der Mittelabschnitt 6 der Innenschiene 2 an seinem der halben U-Form entgegengesetzten Ende in einen abgewinkelten Befestigungsabschnitt 8 übergeht. Dieser Befestigungsabschnitt 8 dient der gestellfesten Befestigung der Auszugschiene 1 insbesondere in einem nicht näher dargestellten Backofen.

Die Laufbahnen 7 für die Kugeln 5 des Kugelkäfigs 4 sind derart ausgebildet, dass zwischen dem Mittelabschnitt 6 und dem dazu parallelen Endbereich der Innenschiene 2 jeweils eine Laufbahn 7 innerhalb und eine Laufbahn 7 außerhalb der U-Form verläuft, so dass sich die beiden Laufbahnen 7 an dieser Seite der Innenschiene 2 versetzt gegenüber liegen. Dadurch wird ein sich gegenüberliegendes Paar von Laufbahnen 7ausgebildet.

Sowohl bei der Auszugschiene 1 als Vollauszug als auch bei der Auszugschiene 1 als Teilauszug besitzen die Außenschienen 3 jeweils eine im Querschnitt etwa kreisrunde Form, wobei die Form jeder Außenschiene 3 nur durch einen Spalt für den Durchtritt der Innenschiene 2 unterbrochen ist.

Des Weiteren ist beim Vollauszug eine der Einzelschienen 3.1 bzw. 3.2 der Außenschiene 3 und beim Teilauszug die Innenschiene 2 an einem Gestell lösbar oder starr befestigbar.

Sowohl die Innenschiene 2 als auch jede Außenschiene 3 der Auszugschiene 1 sind jeweils einteilig ausgebildet. Weiterhin ist an den jeweiligen Enden der Außenschiene 3 ein Anschlag 9 einteilig mit dieser ausgebildet.

Es wird darauf hingewiesen, dass die Kugelkäfige mit den Kugeln stattdessen als Wälzkörperkäfig mit Wälzkörpern ausgebildet sein können. Die Geometrie der Laufbahnen 7 korrespondiert dabei immer zur Form der Kugeln 5 bzw. Wälzkörper.

### Liste der Bezugszeichen

- 1: Auszugschiene
- 2: Innenschiene
- 3: Außenschiene
- 3.1: Einzelschiene
- 3.2: Einzelschiene
- 4: Kugelkäfig
- 4.1: Kugelkäfig
- 4.2: Kugelkäfig
- 5: Kugel
- 6: Mittelabschnitt der Innenschiene
- 7: Laufbahn für Kugeln
- 8: Befestigungsabschnitt
- 9: Anschlag

## Patentansprüche

1. Teleskopierbare Auszugschiene, als Vollauszug und Teilauszug, insbesondere für einen Schienenauszug, wie Bleche, Roste und dergleichen in einem Backofen, wobei die Auszugschienen (1) jeweils eine Innenschiene (2) und diese teilweise übergreifende Außenschiene (3) aufweisen und zwischen der Innenschiene (2) und dazu verschiebbarer Außenschiene (3) zumindest ein Kugelkäfig (4) mit Kugeln (5) angeordnet ist, die in Laufbahnen (7) der Innenschiene (2) und der Außenschiene (3) geführt sind, wobei
- beim Vollauszug die Außenschiene (3) aus zwei Einzelschienen (3.1 ;3.2) besteht, welche jeweils die an den Längsseiten der Innenschiene (2) geführten Kugelkäfige (4.1 ;4.2) zumindest teilweise umgreifen, und
- beim Teilauszug die Außenschiene (3) aus einer einzelnen Schiene besteht, welche den an einer Längsseite der Innenschiene (2) geführten Kugelkäfig (4) zumindest teilweise umgreift,
**dadurch gekennzeichnet, dass**
- beim Vollauszug die Innenschiene (2) im Querschnitt einen geraden Mittelabschnitt (6) aufweist, der an seinen jeweiligen, den Außenschienen (3) zugwandten Endbereichen in eine abgewinkelte U-Form übergeht, wobei die U-förmigen Enden dann weiter nach außen in jeweils einen Endbereich parallel zum Mittelabschnitt (6) verlaufen, und zwischen dem Mittelabschnitt (6) und den dazu parallelen Endbereichen die jeweils beiden sich paarweise gegenüber befindlichen Laufbahnen (7) der Kugeln (5) der Kugelkäfige (4) gebildet sind,
- beim Teilauszug die Innenschiene (2) im Querschnitt einen geraden Mittelabschnitt (6) aufweist, der an seinem der Außenschiene (3) zugewandten Endbereich in eine abgewinkelte halbe U-Form übergeht, wobei das halbe U-förmige Ende dann weiter nach außen in einen Endbereich parallel zum Mittelabschnitt (6) verläuft, und zwischen dem Mittelabschnitt (6) und dem dazu parallelen Endbereich die beiden sich gegenüber befindlichen Laufbahnen (7) der Kugeln (5) des Kugelkäfigs (4) gebildet sind, wobei der Mittelabschnitt (6) der Innenschiene (2) an seinem der halben U-Form entgegengesetzten Ende in einen abgewinkelten Befestigungsabschnitt (8) übergeht.

2. Teleskopierbare Auszugschiene nach Anspruch 1, **dadurch gekennzeichnet, dass** beim Vollauszug die Laufbahnen (7) für die Kugeln (5) des Kugelkäfigs (4) derart ausgebildet sind, dass zwischen dem Mittelabschnitt (6) und jeweils einem dazu parallelen Endbereich der Innenschiene (2) jeweils eine Laufbahn (7) innerhalb und eine Laufbahn (7) außerhalb der U-Form verläuft, so dass sich die beiden Laufbahnen (7) an jeder Seite der Innenschiene (2) versetzt gegenüber liegen und somit zwischen dem Mittelabschnitt (6) und den beiden Endbereichen der Innenschiene (2) zwei sich gegenüberliegende Paare von Laufbahnen (7) ausgebildet sind.

3. Teleskopierbare Auszugschiene nach Anspruch 1, **dadurch gekennzeichnet, dass** beim Teilauszug die Laufbahnen (7) für die Kugeln (5) des Kugelkäfigs (4) derart ausgebildet sind, dass zwischen dem Mittelabschnitt (6) und dem dazu parallelen Endbereich der Innenschiene (2) jeweils eine Laufbahn (7) innerhalb und eine Laufbahn (7) außerhalb der U-Form verläuft, so dass sich die beiden Laufbahnen (7) an dieser Seite der Innenschiene (2) versetzt gegenüber liegen und somit ein sich gegenüberliegendes Paar von Laufbahnen (7) ausgebildet ist.

4. Teleskopierbare Auszugschiene nach Anspruch 1, **dadurch gekennzeichnet, dass** die Außenschienen (3) jeweils eine im Querschnitt etwa halbkreis- oder kreisrunde Form aufweisen, wobei die Form jeder Außenschiene (3) nur durch einen Spalt für den Durchtritt der Innenschiene (2) unterbrochen ist.

5. Teleskopierbare Auszugschiene nach Anspruch 1, **dadurch gekennzeichnet, dass** beim Vollauszug eine der Einzelschienen (3.1 ;3.2) der Außenschiene (3) und beim Teilauszug die Innenschiene (2) an einem Gestell lösbar oder starr befestigbar ist.

6. Teleskopierbare Auszugschiene nach Anspruch 1, **dadurch gekennzeichnet, dass** sowohl die Innenschiene (2) als auch jede Außenschiene (3) der Auszugschiene (1) jeweils einteilig ausgebildet sind.

7. Teleskopierbare Auszugschiene nach Anspruch 1, **dadurch gekennzeichnet, dass** an den jeweiligen Enden der Außenschiene (3) ein Anschlag (9) einteilig mit dieser ausgebildet ist.
